(19) Europäisches Patentamt
European Patent Office
Office européen des brevets

(11) EP 0 650 128 B1

(12) **EUROPEAN PATENT SPECIFICATION**

(45) Date of publication and mention of the grant of the patent:
**05.07.2000 Bulletin 2000/27**

(51) Int. Cl.[7]: **G06F 17/14**

(21) Application number: **94116934.4**

(22) Date of filing: **26.10.1994**

# (54) Discrete cosine transform processor

Rechner für die diskrete Cosinustransformation

Processeur de calcul d'une transformée discète du cosinus

(84) Designated Contracting States:
**DE FR GB**

(30) Priority: **26.10.1993 JP 26737693**

(43) Date of publication of application:
**26.04.1995 Bulletin 1995/17**

(73) Proprietor:
**KABUSHIKI KAISHA TOSHIBA**
**Kawasaki-shi, Kanagawa-ken 210-8572 (JP)**

(72) Inventors:
- **Nagamatsu, Tetsu**
**Kawasaki-shi, Kanagawa-ken (JP)**
- **Kim, Lee-Sup**
**Dongdaemoon-ku, Seoul (KR)**

(74) Representative:
**Lehn, Werner, Dipl.-Ing. et al**
**Hoffmann Eitle,**
**Patent- und Rechtsanwälte,**
**Arabellastrasse 4**
**81925 München (DE)**

(56) References cited:
**US-A- 4 831 574**

- **IEICE TRANSACTIONS ON ELECTRONICS, vol.E75-C, no.4, April 1992, TOKYO JP pages 390 - 396, XP000301668 SHIN-ICHI URAMOTO ET AL 'A 100-MHZ 2-D DISCRETE COSINE TRANSFORM CORE PROCESSOR'**
- **IEEE JOURNAL OF SOLID-STATE CIRCUITS, vol.27, no.12, December 1992, NEW YORK US pages 1886 - 1894, XP000329041 KUNITOSHI AONO ET AL 'A VIDEO DIGITAL SIGNAL PROCESSOR WITH A VECTOR PIPELINE ARCHITECTURE'**
- **MICROPROCESSING AND MICROPROGRAMMING, vol.38, no.1/5, September 1993, AMSTERDAM NL pages 359 - 365, XP000383794 HARALAMBOS C.KARATHANASIS 'ON COMPUTING THE 2-D DISCRETE COSINE TRANSFORM USING ROTATIONS'**
- **IEEE TRANSACTIONS ON ACOUSTICS,SPEECH AND SIGNAL PROCESSING, vol.39, no.6, June 1991, NEW YORK US pages 1305 - 1313, XP000235039 WEIPING LI 'A NEW ALGORITHM TO COMPUTE THE DCT AND ITS INVERSE'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Xerox (UK) Business Services
2.16.7 (HRS)/3.6

## Description

Background of the Invention

The present invention relates to a discrete cosine transform processor suitable for use to compress and expand image data, in particular.

Recently, since semiconductor technology has advanced markedly and in addition International Standards (e.g., CCITT H261, ISO, MPEG, etc.) with respect to image data coding have been established, LSIs for compressing and expanding image data are now being developed. The basis of the standards of the image data compression and expansion technique resides in two-dimensional discrete cosine transformation. Here, the two-dimensional discrete cosine transformation at N x N points in the forward direction can be expressed by the following formula:

$$X(u,v)=\frac{2}{N}C(u)C(v)\sum_{i=0}^{N-1}\sum_{j=0}^{N-1}x(i,j)\cos\frac{(2i+1)u\pi}{2N}\cos\frac{(2j+1)v\pi}{2N} \qquad (1)$$

where x(i, j) (i, j = 0, 1, ..., N-1) denote the original signals (image data) and X(u, v) (u, v = 0, 1, ..., N-1) denote the transformed coefficients. Further, when $u = v = 0$, $C(0) = C(0) = 2^{-1/2}$ and when u and $V \neq 0$, $C(u) = C(v) = 1$.

Further, the discrete cosine transformation in the inverse direction can be expressed by the following formula:

$$X(i,j)=\frac{2}{N}\sum_{u=0}^{N-1}\sum_{v=0}^{N-1}C(u)C(v)X(u,v)\cos\frac{(2i+1)u\pi}{2N}\cos\frac{(2j+1)v\pi}{2N} \qquad (2)$$

Now, assuming that X denotes a matrix of N x N having components of X(u, v) (where u denotes the u-th row and v denotes the v-th column); x denotes a matrix of N x N having components of x(i, j) (where i denotes the i-th row and j denotes the j-th column); and further

$$C_{u,i} = (2/N)^{1/2}\, C(u) \cos((2i+1)u\pi / N)$$

denotes a transform matrix C of N x N having components of the u-th row and the i-th column), the above-mentioned formulae (1) and (2) can be expressed as follows:

$$X = C \cdot x \cdot C^t \qquad (3)$$

$$x = C^t \cdot X \cdot C \qquad (4)$$

where $C^t$ denotes the transposed matrix of the matrix C. The above formulae (3) and (4) indicate that the two-dimensional discrete cosine transformation can be obtained by twice achieving the one-dimensional discrete cosine transformation.

In the case of the general two-dimensional discrete cosine transformation used for image data compression and expansion, the transformation is usually executed in unit of block of 8 (vertical pixels) x 8 (horizontal pixels). Therefore, the case of N = 8 will be explained hereinbelow by way of example. In this case, since the transform matrix is a (8 x 8) matrix, it has been so far necessary to simply execute multiplication and accumulation calculations 4096 times. Therefore, in order to realize a discrete cosine transform LSI, the important problem is to execute a great amount of multiplication and accumulation calculations at high speed by use of a small-scaled circuit.

Now, a technique to execute a great amount of multiplication and accumulation calculations effectively is so far known. In this technique, the two-dimensional discrete cosine transformation is executed by separating it into two one-dimensional discrete cosine transformation calculations in the row and column directions. In more detail, in this technique, the one-dimensional discrete cosine transformation is executed for the input data in the row direction, and the calculated results are inverted by and then stored in an inversion RAM. Further, these inverted data are further transformed on the basis of one-dimensional discrete cosine transformation in the column direction to obtain the two-dimensional discrete cosine transform coefficients. Further, in the above-mentioned technique, a high speed algorithm for one-dimensional discrete cosine transformation has been used. The discrete cosine transformation in the forward direction executed in accordance with this high speed algorithm can be expressed as follows:

$$\begin{bmatrix} X_0 \\ X_2 \\ X_4 \\ X_6 \end{bmatrix} = \frac{1}{2} \begin{bmatrix} A & A & A & A \\ B & C & -C & -B \\ A & -A & -A & A \\ C & -B & B & -C \end{bmatrix} \begin{bmatrix} x_0+x_7 \\ x_1+x_6 \\ x_2+x_5 \\ x_3+x_4 \end{bmatrix} \quad \ldots (5)$$

$$\begin{bmatrix} X_1 \\ X_3 \\ X_5 \\ X_7 \end{bmatrix} = \frac{1}{2} \begin{bmatrix} D & E & F & G \\ E & -G & -D & -F \\ F & -D & G & E \\ G & -F & E & -D \end{bmatrix} \begin{bmatrix} x_0-x_7 \\ x_1-x_6 \\ x_2-x_5 \\ x_3-x_4 \end{bmatrix} \quad \ldots (6)$$

where A = cos (π/4) , B = cos (π/8) , C = sin (π/8) , D = cos (π/16) , E = cos (3π/16) , F = sin (3π/16) , F = sin (3π/16) , and G = sin (π/16) , which are all transform matrix components; xi (i = 0, 1, .., 7) denote the original signals and Xj (j = 0, 1, .., 7) denote the transform coefficients.

Further, the discrete cosine transformation in the inverse direction executed in accordance with this high speed algorithm can be expressed as follows:

$$\begin{bmatrix} x_0 \\ x_2 \\ x_4 \\ x_6 \end{bmatrix} = \frac{1}{2} \begin{bmatrix} A & B & A & C \\ A & -C & -A & B \\ A & -B & A & -C \\ A & C & -A & -B \end{bmatrix} \begin{bmatrix} X_0 \\ X_2 \\ X_4 \\ X_6 \end{bmatrix} + \frac{1}{2} \begin{bmatrix} D & E & F & G \\ F & -D & G & E \\ -G & F & -E & D \\ -E & G & D & F \end{bmatrix} \begin{bmatrix} X_1 \\ X_3 \\ X_5 \\ X_7 \end{bmatrix} \quad \ldots (7)$$

$$\begin{bmatrix} x_1 \\ x_3 \\ x_5 \\ x_7 \end{bmatrix} = \frac{1}{2} \begin{bmatrix} A & C & -A & -B \\ A & -B & A & -C \\ A & -C & -A & B \\ A & B & A & C \end{bmatrix} \begin{bmatrix} X_0 \\ X_2 \\ X_4 \\ X_6 \end{bmatrix} - \frac{1}{2} \begin{bmatrix} -E & G & D & F \\ -G & F & -E & D \\ F & -D & G & E \\ D & E & F & G \end{bmatrix} \begin{bmatrix} X_1 \\ X_3 \\ X_5 \\ X_7 \end{bmatrix} \quad \ldots (8)$$

In the prior art discrete cosine transform processor for executing the discrete calculations in both the forward and inverse directions in accordance with the above-mentioned formulae (5), (6), (7) and (8), the discrete calculation results have been so far obtained as follows: external data are inputted through a data input device; the calculations are executed through adders, subtracters, registers, etc. in combination; and the discrete calculation results are obtained on the basis of multiplication and accumulation calculation results stored in a read only memory.

The data input device to which external data are input holds image data $x_0$, ..., $x_7$ in the case of the forward direction transformation and transform coefficients $X_0$, ..., $X_7$ in the case of the inverse direction transformation. The data input device is constructed by two banks of orthogonal memory (corner turn memory) (two bank ROM) for executing parallel-serial transformation, as shown in Fig. 1. In more detail, as shown in Fig. 2, the orthogonal memory includes 8 word WORD0, ..., WORD7, and the WORDi (i = 0, .., 7) holds the input data $x_i$ or $X_i$. Therefore, each word has a number of bits the same as that of the input data. For instance, if the input data $x_i$ or $X_i$ is 16-bit data, the number of bits of each word of the orthogonal memory is 16. In the case of the orthogonal memory, data are generally written in the word direction and read in one bit column direction, so that it is possible to execute parallel-serial transformation. In the data input device as shown in Fig. 2, 8 input data $x_0$, .., $x_7$ or $X_0$, .., $X_7$ are written in the A-bank of the orthogonal memory. Further, when these written data are being read, the succeeding 8 input data are written in the B-bank of the orthogonal memory, so that the data can be inputted continuously. Further, in this data read, the input data are read 2 bits by 2 bits in one cycle beginning from the less significant bit. Now, if the input data are of 16 bits, 8 cycles are required to read the input data completely. Further, the data input device has 8 output terminals $2_1$ to $2_8$, and 2-digit 2-bit input data of $x_i$ or $X_i$ are outputted in each cycle from the output terminal $2_i$ (i = 1, ..., 8). For instance, if the input data ($x_i$ or $X_i$) are $d_{15}$, $d_{14}$, .., $d_1$, $d_0$, 2-digit 2-bit data $d_{2j-1}$ and $d_{2j-2}$ are outputted from the output terminal 2, in j (j = 1, .., 8) cycle.

Further, two read only memories (ROMs) are used for discrete calculations to store the multiplication and accumulation calculation results. The product addition data of the even-order coefficients are stored in one of the ROMs and those of odd-order coefficients are stored in the other thereof. Further, each ROM includes 4 (first to fourth) memory sections.

The data stored in the first to fourth memory sections are different from each other between the forward direction transformation and the inverse direction transformation, so that the ROM is composed of two banks as shown in Fig. 1. The ROM shown in Fig. 1 is of contact program ROM type, in which NMOS transistors whose gates are connected to word lines 42, respectively are used as memory cells, and the ROM can be programmed depending upon whether the drains (on the side opposite to the bit line 43) of these transistors are connected to any of the 4 program lines 46, 47, 48 and 49 or not.

In the prior art discrete cosine transform processor based upon the above-mentioned discrete calculation system, in order to use the read only memory in common for both the forward and inverse directions, since the contact program system of two-bank construction is adopted, the data stored therein can be replaced between the forward and inverse direction transformations. However, in the prior art two-bank construction, since 4 control lines are necessary, there exists a problem in that a large area is required, so that the chip size of the discrete cosine transform processor increases inevitably.

On the other hand, another prior art discrete cosine transform processor is disclosed in Japanese Laid-open Patent Application 5-153402 (1993) such that the discrete cosine transform (DCT) calculations are executed by sampling the input data of a plurality of dimensions 2 bits by 2 bits for each dimension and by using look-up tables prepared for each of the two bits and for each of the forward and inverse DCT matrices. In this prior art DCT processor, however, since two ROMs for storing the same data are required for both the forward and inverse transformation directions in order to execute 2-digit processing in one cycle, 4 ROM tables are necessary for each coefficient, so that the ROM tables as large as 64 are required in the case of 2 dimensions of 8 coefficients. In other words, in this prior art processor, there exists another problem in that the number of necessary ROM tables is large.

From IEICE Transactions on Electronics, volume E75-C, no. 4, April 1992, pages 390-396, Shin-ichi Uramoto et al.: "A 100-MHz 2-D Discrete Cosine Transform Core Processor", a 100-MHz 2-dimensional DCT (Discrete Cosine Transform) core processor is known, which is applicable to the real-time processing of HDTV signals. A layout scheme with a column-interleaved memory and a new ROM circuit are introduced for the efficient implementation of memory-based signal processing circuits. Also, mean values of errors generated in a core are minimized to enhance the computational accuracy with the word-length constraints. Consequently, the DCT processor is described as featuring a fast operating speed and small area.

The calculation of a discrete cosine transform and an inverse discrete cosine transform are mentioned, as well as preprocessing means for carrying out operations preceding the multiplication and accumulation operation in the DCT and IDCT operations, multiplying and accumulating means for the DCT and IDCT operations, and postprocessing means for carrying out operations on the result.

The invention will be carried out according to appended independent claim 1.

## SUMMARY OF THE INVENTION

With these problems in mind, therefore, the object of the present invention is to provide a discrete cosine transform processor which can use a memory of as small a size as possible as a whole. This object is solved by a processor having the features of claim 1.

According to the present invention, there is provided a discrete cosine transform processor for executing discrete cosine transform calculations in both forward and inverse directions on the basis of previously stored multiplication and accumulation data, having:

memory means having a first memory section for storing multiplication and accumulation calculation data for the forward direction transformation and a second memory section for storing multiplication and accumulation calculation data for the inverse direction transformation other than data in common to those stored in the first memory section; and

sign inverting means for inverting signs of the data used in common for the inverse direction transformation, among the data stored in the first memory section.

In the discrete cosine transform processor according to the present invention, memory means for storing product addition data can be used in common for both the forward and inverse direction transformations by providing inverting means for inverting a part of data and by making the best use of the fact that many transform coefficients can be used in common for both the forward and inverse direction discrete cosine transformations. As a result, it is possible to reduce the effective area occupied by the memory means and thereby to reduce the size of the transform processor.

## BRIEF DESCRIPTION OF THE DRAWINGS

In the accompanying drawings:

Fig. 1 is a circuit diagram showing a prior art ROM of two-bank structure;
Fig. 2 is a pattern view showing a prior art practical data input device;
Fig. 3 is a block diagram showing a first embodiment of the discrete cosine transform processor according to the present invention;
Fig. 4 is a block diagram showing a second embodiment of the discrete cosine transform processor according to the present invention;
Figs. 5A to 5C are circuit diagrams showing practical examples of complement generators; and
Fig. 6 is a circuit diagram showing a ROM of one-bank structure.

## DETAILED DESCRIPTION OF THE PREFERRED EMBODIMENTS

Fig. 3 shows a first embodiment of the discrete cosine transform processor according to the present invention. This discrete cosine transform processor comprises a data input device 1, adders $3_1$, ..., $3_4$, subtracters $4_1$, .., $4_4$, select switches $5_1$, ..., $5_4$, read only memories 6a and 6b, complement generators $7_1$ and $7_2$, pipe-line registers $8_1$, .., $8_{16}$, adders $9_1$, ..., $9_8$, pipe-line registers $10_1$, ..., $10_8$, adders $11_1$, ..., $11_8$, registers $12_1$, .., $12_8$, adders $13_1$, ..., $13_4$, subtracters $14_1$ and $14_4$, select switches $19_1$ and $19_8$, and output registers $22_1$, .., $22_8$.

As already described, the data input device 1 holds the data inputted from the outside, that is, image data $x_0$, ... $x_7$ in the case of the forward direction transformation and transform coefficients $X_0$, ... $X_7$ in the case of the inverse direction transformation, for instance.

As shown in Fig. 3, the data input device 1 has 8 output terminals $2_1$, ..., $2_8$, and 2-digit 2-bit input data $x_i$ or $X_i$ are outputted from the output terminal $2_i$ (i = 1, ..., 8) for each cycle. For instance, if the input data ($x_i$ or $X_i$) are $d_{15}$, $d_{14}$, ..., $d_1$, $d_0$, 2-digit 2-bit data $d_{2j-1}$ and $d_{2j-2}$ are outputted from the output terminal $2_i$ in j (j = 1, .., 8) cycle.

The output ($x_0$ or $X_0$) of the output terminal $2_1$ are transmitted to the adder $3_1$, the subtracter $4_4$, and the select switch $5_1$, and the output ($x_1$ or $X_1$) of the output terminal $2_2$ are transmitted to the adder $3_2$, the subtracter $4_3$, and the select switch $5_2$. The output ($x_2$ or $X_2$) of the output terminal $2_3$ are transmitted to the adder $3_3$, the subtracter $4_2$, and the select switch $5_3$, and the output ($x_3$ or $X_3$) of the output terminal $2_4$ are transmitted to the adder $3_4$, the subtracter $4_1$, and the select switch $5_4$. Further, the output ($x_4$ or $X_4$) of the output terminal $2_5$ are transmitted to the adder $3_4$, the subtracter $4_1$, and the select switch $5_5$, and the output ($x_5$ or $X_5$) of the output terminal $2_6$ are transmitted to the adder $3_5$, the subtracter $4_2$, and the select switch $5_6$. The output ($x_6$ or $X_6$) of the output terminal $2_7$ are transmitted to the adder $3_2$, the subtracter $4_3$, and the select switch $5_7$, and the output ($x_7$ or $X_7$) of the output terminal $2_8$ are transmitted to the adder $3_1$, the subtracter $4_4$, and the select switch $5_8$.

The adder $3_1$ calculates the addition ($x_0 + x_7$ or $X_0 + X_7$) of the outputs of the output terminals $2_1$ and $2_8$, and transmits the calculated result to the select switch $5_1$, and the adder $3_2$ calculates the addition ($x_1 + x_6$ or $X_1 + X_6$) of the outputs of the output terminals $2_2$ and $2_7$, and transmits the calculated result to the select switch $5_3$. Further, the adder $3_3$ calculates the addition ($x_2 + x_5$ or $X_2 + X_5$) of the outputs of the output terminals $2_3$ and $2_6$, and transmits the calculated result to the select switch $5_5$, and the adder $3_4$ calculates the addition ($x_3 + x_4$ or $X_3 + X_4$) of the outputs of the output terminals $2_4$ and $2_5$, and transmits the calculated result to the select switch $5_7$. On the other hand, the subtracter $4_1$ calculates the subtraction ($x_0 - x_7$ or $X_0 - X_7$) between the outputs of the output terminals $2_1$ and $2_8$, and transmits the calculated result to the select switch $5_8$, and the subtracter $4_2$ calculates the subtraction ($x_1 - x_6$ or $X_1 - X_6$) between the outputs of the output terminals $2_2$ and $2_7$, and transmits the calculated result to the select switch $5_6$. Further, the subtracter $4_3$ calculates the subtraction ($x_2 - x_5$ or $X_2 - X_5$) between the outputs of the output terminals $2_3$ and $2_6$, and transmits the calculated result to the select switch $5_4$, and the subtracter $4_4$ calculates the subtraction ($x_3 - x_4$ or $X_3 - X_4$) between the outputs of the output terminals $2_4$ and $2_5$, and transmits the calculated result to the select switch $5_2$.

The select switch $5_1$ selects and outputs the output ($x_0 + x_7$) of the adder $3_1$ in the case of the forward direction transformation but the output ($X_0$) of the output terminal $2_1$ in the case of the inverse direction transformation. The select switch $5_2$ selects and outputs the output ($x_0 - x_7$) of the subtracter $4_4$ in the case of the forward direction transformation but the output ($X_1$) of the output terminal $2_2$ in the case of the inverse direction transformation. The select switch

$5_3$ selects and outputs the output ($x_1 + x_6$) of the adder $3_2$ in the case of the forward direction transformation but the output ($X_2$) of the output terminal $2_3$ in the case of the inverse direction transformation. The select switch $5_4$ selects and outputs the output ($x_1 - x_6$) of the subtracter $4_3$ in the case of the forward direction transformation but the output ($X_3$) of the output terminal $2_4$ in the case of the inverse direction transformation. Further, the select switch $5_5$ selects and outputs the output ($x_2 + x_5$) of the adder $3_3$ in the case of the forward direction transformation but the output ($X_4$) of the output terminal $2_5$ in the case of the inverse direction transformation. The select switch $5_6$ selects and outputs the output ($x_2 - x_5$) of the subtracter $4_2$ in the case of the forward direction transformation but the output ($X_5$) of the output terminal $2_6$ in the case of the inverse direction transformation. The select switch $5_7$ selects and outputs the output ($x_3 + x_4$) of the adder $3_4$ in the case of the forward direction transformation but the output ($X_6$) of the output terminal $2_7$ in the case of the inverse direction transformation. The select switch $5_8$ selects and outputs the output ($x_3 - x_4$) of the subtracter $4_1$ in the case of the forward direction transformation but the output ($X_7$) of the output terminal $2_8$ in the case of the inverse direction transformation.

The outputs of the select switches $5_1$, $5_3$, $5_5$ and $5_7$ are given to the ROM 6a, and the outputs of the select switches $5_2$, $5_4$, $5_6$ and $5_8$ are given to the ROM 6b, respectively.

The ROMs 6a and 6b are read only memories used for discrete calculations, that is, for storing the multiplication and accumulation calculation results. Further, the ROM 6a stores the product additions data of even-degree coefficients and the ROM 6b stores the multiplication and accumulation data of odd-degree coefficients. Further, the ROMs 6a and 6b include first to fourth memory sections, respectively.

Here, in the two continuous 2-digit 2-bit data outputted by the select switch $5_i$ (i = 1, .., 8), the less significant bit data thereof are denoted by $y_{ai-1}$ and the more significant bit data thereof are denoted by $y_{bi-1}$. Then, the respective first to fourth memory sections of the ROM 6a output two multiplication and accumulation data stored in the memory cells at the respective addresses determined by the less significant 4 bit data $y_{a0}$, $y_{a2}$, $y_{a4}$, $y_{a5}$ and the more significant 4 bit data $y_{b0}$, $y_{b2}$, $y_{b4}$, $y_{b6}$, respectively on the basis of the outputs $y_{a0}$, $y_{b0}$, $y_{a2}$, $y_{b2}$, $y_{a4}$, $y_{b4}$, $y_{a6}$, and $y_{b6}$ of the select switches $5_1$, $5_3$, $5_5$ and $5_7$.

For instance, in the case of the forward direction transformation, data corresponding to the multiplication and accumulation of the first row on the right side in formula (5) expressed as follows are stored in the memory cells at the addresses $y_0$, $y_2$, $y_4$, $y_6$ of the first memory section of the ROM 6a:

$$(Ay_0 + Ay_2 + Ay_4 + Ay_6) / 2$$

On the other hand, in the case of the inverse direction transformation, data corresponding to the multiplication and accumulation of the first term and the first row on the right side in formula (7) expressed as follows are stored in the memory cells at the addresses $y_0$, $y_2$, $y_4$, $y_6$ of the first memory section of the ROM 6a:

$$(Ay_0 + By_2 + Ay_4 + Cy_6) / 2$$

Here, the product addition data corresponding to the less and more significant bits are read by and held in the pipe-line registers $8_1$ and $8_2$, respectively.

Further, in the case of the forward direction transformation, data corresponding to the multiplication and accumulation of the second row on the right side in formula (5) expressed as follows are stored in the memory cells at the addresses $y_0$, $y_2$, $y_4$, $y_6$ of the second memory section of the ROM 6a:

$$(By_0 + Cy_2 - Cy_4 - By_6) / 2$$

On the other hand, in the case of the inverse direction transformation, data corresponding to the multiplication and accumulation of the first term and the first row on the right side in formula (7) expressed as follows are stored in the memory cells at the addresses $y_0$, $y_2$, $y_4$, $y_6$ of the second memory section of the ROM 6a:

$$(Ay_0 - Cy_2 - Ay_4 + By_6) / 2$$

Here, the product addition data corresponding to the less and more significant bits are read by and held in the pipe-line registers $8_3$ and $8_4$, respectively.

Further, in the case of the forward direction transformation, data corresponding to the multiplication and accumulation of the third row on the right side in formula (5) expressed as follows are stored in the memory cells at the addresses $y_0$, $y_2$, $y_4$, $y_6$ of the third memory section of the ROM 6a:

$$(Ay_0 - Ay_2 - Ay_4 + Ay_6) / 2$$

On the other hand, in the case of the inverse direction transformation, data corresponding to the multiplication and accumulation of the first term and the third row on the right side in formula (7) expressed as follows are stored in the memory cells at the addresses $y_0$, $y_2$, $y_4$, $y_6$ of the third memory section of the ROM 6a:

$$(Ay_0 - By_2 + Ay_4 - Cy_6) / 2$$

Here, the product addition data corresponding to the less and more significant bits are read by and held in the pipe-line registers $8_5$ and $8_6$, respectively.

Further, in the case of the forward direction transformation, the multiplication and accumulation data corresponding to the fourth row on the right side of the formula (5) expressed as follows are stored in the memory cells at the address $y_0$, $y_2$, $y_4$, $y_6$ of the fourth memory section of the ROM 6a:

$$(Cy_0 - By_2 + By_4 - Cy_5) / 2$$

On the other hand, in the case of the inverse direction transformation, the multiplication and accumulation data corresponding to the first term and the fourth row on the right side of the formula (7) expressed as follows are stored in the memory cells at the address $y_0$, $y_2$, $y_4$, $y_5$ of the fourth memory section of the ROM 6a:

$$(Ay_0 + Cy_2 - Ay_4 - By_6) / 2$$

Here, the multiplication and accumulation data corresponding to the less and more significant bits are read by and held in the pipe-line registers $8_7$ and $8_8$, respectively.

On the other hand, the ROM 6b stores the multiplication and accumulation addition results of the odd-degree coefficients, and includes first to fourth memory sections in the same way as with the case of the prior art transform processor. However, being different from the prior art ROM, the first to fourth memory sections of the ROM 6b is ROM of one-bank construction which can be programmed by two program lines 44 and 45 as shown in Fig. 6. Therefore, these two program lines are used in common, irrespective of the forward and inverse direction transformations. Further, the respective first to fourth memory sections of the ROM 6b output two product addition data stored in the memory cells at the respective addresses determined by the less significant 4 bit data $y_{a1}$, $y_{a3}$, $y_{a5}$, $Y_{a7}$ and the more significant 4 bit data $y_{b1}$, $y_{b3}$, $y_{b5}$, $y_{b7}$, on the basis of the outputs $y_{a1}$, $y_{b1}$, $y_{a3}$, $y_{b3}$, $y_{a5}$, $y_{b5}$, $y_{a7}$, and $y_{b7}$ of the select switches $5_2$, $5_4$, $5_6$ and $5_8$. For instance, the multiplication and accumulation data corresponding to the multiplication and accumulation of the first row on the right side in formula (6) expressed as follows are stored in the memory cells at the addresses $y_1$, $y_3$, $y_5$, $y_7$ of the first memory section of the ROM 6b:

$$(Dy_1 + Ey_3 + Fy_5 + Gy_7) / 2$$

Here, the product addition data corresponding to the less and more significant bits are read by and held in the pipe-line registers $8_9$ and $8_{10}$, respectively.

Further, the product addition data corresponding to the product addition of the second row on the right side in formula (6) expressed as follows are stored in the memory cells at the addresses $y_1$, $y_3$, $y_5$, $y_7$ of the second memory section of the ROM 6b:

$$(Ey_1 - Gy_3 - Dy_5 + Fy_7) / 2$$

Here, in the case of the forward direction transformation, the multiplication and accumulation data corresponding to the less and more significant bits are transmitted to the complement generator $7_1$ and then outputted as they are to the registers $8_{11}$ and $8_{12}$, respectively. In the case of the inverse direction transformation, on the other hand, 2' complements are calculated and then outputted to the registers $8_{11}$ and $8_{12}$ respectively.

Further, the multiplication and accumulation data corresponding to the product addition of the third row on the right side in formula (6) expressed as follows are stored in the memory cells at the addresses $y_1$, $y_3$, $y_5$, $y_7$ of the third memory section of the ROM 6b:

$$(Fy_1 - Dy_3 + Gy_5 + Ey_7) / 2$$

Here, the product addition data corresponding to the less and more significant bits are read by and held in the pipe-line registers $8_{13}$ and $8_{14}$, respectively.

Further, the multiplication and accumulation data corresponding to the product addition of the fourth row on the right side in formula (6) expressed as follows are stored in the memory cells at the addresses $y_1$, $y_3$, $y_5$, $y_7$ of the

fourth memory section of the ROM 6b:

$$(Gy_1 - Fy_3 + Ey_5 - Dy_7) / 2$$

Here, in the case of the forward direction transformation, the product addition data corresponding to the less and more significant bits are transmitted to the complement generator $7_2$ and then outputted as they are to the registers $8_{15}$ and $8_{16}$, respectively. In the case of the inverse direction transformation, on the other hand, 2' complements are calculated and then outputted to the registers $8_{15}$ and $8_{16}$, respectively.

The complement generators $7_i$ (i = 1 and 2) outputs the 2 n-bit (n=16, in this example) data transmitted by the ROM 6b as they are in the case of the forward direction transformation, and forms 2's complements of the two n-bit data in the case of the inverse direction transformation. The complement generators $7_i$ can be constructed by a circuit as shown in Fig. 5A, for instance. In Fig. 5A, if the n-bit data are denoted by $d_{n-1}$, $d_{n-2}$, ..., $d_1$, $d_0$, the complement generators 7i is composed of (2n-1) units of OR circuits, 2n-units of AND circuit, and 2n-units of exclusive OR circuits. Further, the control signal is at an "L" level in the case of the forward direction transformation and at an "H" level in the case of the inverse direction transformation. Further, an inputted carry signal is at the "L" level in the case of the inverse direction transformation. In the circuit construction as shown in Fig. 5A, the exclusive OR circuits output the data the same as the input data in the case of the forward direction transformation, and 2's complements in the case of the inverse direction transformation. Further, in Fig. 5A, although 2's complements are generated, without being limited thereto, it is also possible to use the complement generators for generating 1's complement, as shown in Fig. 5B or 5C. In this case, it is necessary to input a carry signal to the least significant bit (LSB) in an adder 35 (adder $9_i$ in this embodiment) of the succeeding stage.

The product addition data $a_j$ corresponding to the less significant bits of the outputs of the registers $8_{2i-1}$ (i = 1, .., 8) and the multiplication and accumulation, data corresponding to the more significant bits of the outputs of the registers $8_{2i}$ (i = 1, .., 8) are added by the adders $9_i$, and the addition results ($a_i$ + $2.b_i$) are transmitted to the pipeline registers $10_i$ and then held thereby. These held data are transmitted to the registers $12_i$ via the adders $11_i$ for accumulation calculations. In this the accumulation, since the data ($x_{i-1}$ or $X_{i-1}$) inputted to the discrete cosine transform processor are of 16 bits and further are read from the parallel-serial converters $2_i$ 2 bits by 2 bits beginning from the less significant bits in sequence in one cycle, the accumulation calculations can be completed in 8 cycles. When the accumulative addition is executed in the j (j = 1, .., 8) cycle, if the final accumulation of the (j-1)-th cycle is denoted by $z_{j-1}$ and the output of the register $10_i$ in the j-th cycle is denoted by $C_j$, the final accumulation value $z_j$ in the j-th cycle can be expressed as follows:

$$z_j = 2^{j-1} . C_j + z_{j-1}$$

Therefore, when the accumulation has been completed, in the case of the forward direction transformation, the register $12_1$ holds the multiplication and accumulation of the first row on the right side of the formula (5) as follows:

$$\{A(x_0+x_7) + A(x_1+x_6) + A(x_2+x_5) + A(x_3+x_4)\} / 2 \quad (9)$$

On the other hand, in the case of the inverse direction transformation, the register $12_1$ holds the multiplication and accumulation of the first term and the first row on the right side of the formula (7) as follows:

$$(AX_0 + BX_2 + AX_4 + CX_6) / 2 \quad (10)$$

Further, in the case of the forward direction transformation, the register $12_2$ holds the multiplication and accumulation of the second row on the right side of the formula (5) as follows:

$$\{B(x_0+x_7) + C(x_1+x_6) - C(x_2+x_5) - B(x_3+x_4)\} / 2 \quad (11)$$

On the other hand, in the case of the inverse direction transformation, the register $12_2$ holds the multiplication and accumulation of the first term and the second row on the right side of the formula (7) as follows:

$$(AX_0 - CX_2 - AX_4 + BX_6) / 2 \quad (12)$$

Further, in the case of the forward direction transformation, the register $12_3$ holds the multiplication and accumulation of the third row on the right side of the formula (5) as follows:

$$\{A(x_0+x_7) - A(x_1+x_6) - A(x_2+x_5) + A(x_3+x_4)\} / 2 \quad (13)$$

On the other hand, in the case of the inverse direction transformation, the register $12_3$ holds the multiplication and accumulation of the first term and the third row on the right side of the formula (7) as follows:

$$(AX_0 - BX_2 + AX_4 - CX_6) / 2 \quad (14)$$

Further, in the case of the forward direction transformation, the register $12_4$ holds the multiplication and accumulation of the fourth row on the right side of the formula (5) as follows:

$$\{C(x_0+x_7) - B(x_1+x_6) + B(x_2+x_5) - C(x_3+x_4)\} / 2 \quad (15)$$

On the other hand, in the case of the inverse direction transformation, the register $12_4$ holds the multiplication and accumulation of the first term and the fourth row on the right side of the formula (7) as follows:

$$(AX_0 + CX_2 - AX_4 - BX_6) / 2 \quad (16)$$

Further, in the case of the forward direction transformation, the register $12_5$ holds the multiplication and accumulation of the first row on the right side of the formula (6) as follows:

$$\{D(x_0-x_7) + E(x_1-x_6) + F(x_2-x_5) + G(x_3-x_4)\} / 2 \quad (17)$$

On the other hand, in the case of the inverse direction transformation, the register $12_5$ holds the multiplication and accumulation of the second term and the fourth row on the right side of the formula (8) as follows:

$$(DX_1 + EX_3 + FX_5 + GX_7) / 2 \quad (18)$$

Further, in the case of the forward direction transformation, the register $12_6$ holds the multiplication and accumulation of the second row on the right side of the formula (6) as follows:

$$\{E(x_0-x_7) - G(x_1-x_6) - D(x_2-x_5) - F(x_3-x_4)\} / 2 \quad (19)$$

On the other hand, in the case of the inverse direction transformation, the register $12_6$ holds the multiplication and accumulation of the second term and the first row on the right side of the formula (8) as follows:

$$(-EX_1 + CX_3 + DX_5 + FX_7) / 2 \quad (20)$$

Further, in the case of the forward direction transformation, the register $12_7$ holds the multiplication and accumulation of the third row on the right side of the formula (6) as follows:

$$\{F(x_0-x_7) - D(x_1-x_6) + G(x_2-x_5) + E(x_3-x_4)\} / 2 \quad (21)$$

On the other hand, in the case of the inverse direction transformation, the register $12_7$ holds the multiplication and accumulation of the second term and the third row on the right side of the formula (8) as follows:

$$(FX_1 - DX_3 + GX_5 + EX_7) / 2 \quad (22)$$

Further, in the case of the forward direction transformation, the register $12_8$ holds the multiplication and accumulation of the fourth row on the right side of the formula (6) as follows:

$$\{G(x_0-x_7) - F(x_1-x_6) + E(x_2-x_5) - D(x_3-x_4)\} / 2 \quad (23)$$

On the other hand, in the case of the inverse direction transformation, the register $12_8$ holds the multiplication and accumulation of the second term and the second row on the right side of the formula (8) as follows:

$$(-GX_1 + FX_3 - EX_5 + DX_7) / 2 \quad (24)$$

Further, the adder $13_1$ calculates an addition of both the outputs of the registers $12_1$ and $12_5$, and the adder $13_2$ calculates an addition of both the outputs of the registers $12_2$ and $12_7$. Further, the adder $13_3$ calculates an addition of both the outputs of the registers $12_3$ and $12_8$, and the adder $13_4$ calculates an addition of both the outputs of the reg-

isters $12_4$ and $12_6$.

On the other hand, the subtracter $14_1$ calculates a subtraction between both the outputs of the registers $12_4$ and $12_6$, and the subtracter $14_2$ calculates a subtraction between both the outputs of the registers $12_3$ and $12_8$. Further, the subtracter $14_3$ calculates a subtraction between both the outputs of the registers $12_2$ and $12_7$, and the subtracter $14_4$ calculates a subtraction between both the outputs of the registers $12_1$ and $12_5$.

The select switch $19_1$ selects the output $X_0$ of the register $12_1$ in the case of the forward direction transformation and the output $x_0$ of the adder $13_1$ in the case of the inverse direction transformation, and outputs the selected one to the output register $22_1$. Further, the select switch $19_2$ selects the output $X_2$ of the register $12_2$ in the case of the forward direction transformation and the output $x_2$ of the adder $13_2$ in the case of the inverse direction transformation, and outputs the selected one to the output register $22_3$.

Further, the select switch $19_3$ selects the output $X_4$ of the register $12_3$ in the case of the forward direction transformation and the output $x_4$ of the adder $13_3$ in the case of the inverse direction transformation, and outputs the selected one to the output register $22_5$. Further, the select switch $19_4$ selects the output $X_6$ of the register $12_4$ in the case of the forward direction transformation and the output $x_6$ of the adder $13_4$ in the case of the inverse direction transformation, and outputs the selected one to the output register $22_7$.

Further, the select switch $19_5$ selects the output $X_1$ of the register $12_5$ in the case of the forward direction transformation and the output $x_1$ of the subtracter $14_1$ in the case of the inverse direction transformation, and outputs the selected one to the output register $22_2$. Further, the select switch $19_6$ selects the output $X_3$ of the register $12_6$ in the case of the forward direction transformation and the output $x_3$ of the subtracter $14_2$ in the case of the inverse direction transformation, and outputs the selected one to the output register $22_4$.

Further, the select switch $19_7$ selects the output $X_5$ of the register $12_7$ in the case of the forward direction transformation and the output $x_5$ of the subtracter $14_3$ in the case of the inverse direction transformation, and outputs the selected one to the output register $22_6$. Further, the select switch $19_8$ selects the output $X_7$ of the register $12_8$ in the case of the forward direction transformation and the output $x_7$ of the subtracter $14_4$ in the case of the inverse direction transformation, and outputs the selected one to the output register $22_8$.

Accordingly, in the case of the forward direction transformation, the transformed data $X_{i-1}$ are held in the output registers $22_i$ (i = 1, .., 8); and in the case of the inverse direction transformation, the transformed data $x_{i-1}$ are held in the output registers $22_i$ (i = 1, .., 8). The held data are outputted to the outside in sequence.

As described above, in the discrete cosine transform processor according to the present invention, it is possible to use the multiplication and accumulation data related to the odd-degree coefficients stored in the ROM 6b in common for both the forward and inverse direction transformations. Therefore, it is possible to adopt the ROM 6b of one-bank structure, so that the size of the ROM 6b can be reduced. Further, in this first embodiment, although the complement generators $7_1$ and $7_2$ are provided, since the area occupied by these complement generators is not so broad, it is possible to reduce the size (occupied area) of the whole transform processor, as compared with the prior art transform processor.

Fig. 4 shows a second embodiment of the discrete cosine transform processor according to the present invention. In this second embodiment, when compared with the first embodiment shown in Fig. 3, complement generators $7_3$ and $7_4$ are provided instead of the complement generators $7_1$ and $7_2$; subtracters $15_1$, ..., $15_4$ are provided instead of the adders $13_1$, .., $13_4$; adders $16_1$, ..., $16_4$ are provided instead of the subtracters $14_1$, .., $14_4$; and select switches $20_1$, ..., $20_8$ are provided instead of the select switches $20_1$, .., $20_8$, respectively. Further, in this second embodiment, the inverse direction transformation is executed in accordance with the following formula:

$$\begin{bmatrix} x_0 \\ x_2 \\ x_4 \\ x_6 \end{bmatrix} = \frac{1}{2}\begin{bmatrix} A & B & A & C \\ A & -C & -A & B \\ A & -B & A & -C \\ A & C & -A & -B \end{bmatrix}\begin{bmatrix} X_0 \\ X_2 \\ X_4 \\ X_6 \end{bmatrix} - \frac{1}{2}\begin{bmatrix} -D & -E & -F & -G \\ -F & D & -G & -E \\ G & -F & E & -D \\ E & -G & -D & -F \end{bmatrix}\begin{bmatrix} X_1 \\ X_3 \\ X_5 \\ X_7 \end{bmatrix} \quad \ldots (25)$$

$$\begin{bmatrix} x_1 \\ x_3 \\ x_5 \\ x_7 \end{bmatrix} = \frac{1}{2}\begin{bmatrix} A & C & -A & -B \\ A & -B & A & -C \\ A & -C & -A & B \\ A & B & A & C \end{bmatrix}\begin{bmatrix} X_0 \\ X_2 \\ X_4 \\ X_6 \end{bmatrix} + \frac{1}{2}\begin{bmatrix} E & -G & -D & -F \\ G & -F & E & -D \\ -F & D & -G & -E \\ -D & -E & -F & -G \end{bmatrix}\begin{bmatrix} X_1 \\ X_3 \\ X_5 \\ X_7 \end{bmatrix} \quad \ldots (26)$$

In the above formulae (25) and (26), the calculation signs of the second term on the right side of each of the formulae (7) and (8) are inverted, and in addition the components of the coefficient matrix of the second term are inverted.

The complement generators $7_3$ and $7_4$ are provided with the functions the same as with the case of the complement generators $7_1$ and $7_2$ of the first embodiment. The complement generator $7_3$ transmits the output data of the first memory section of the ROM 6b as they are in the case of the forward direction transformation, but calculates 2's complements and transmits the calculated results to the registers $8_9$ and $8_{10}$ in the case of the inverse direction transformation. The complement generator $7_4$ transmits the output data of the third memory section of the ROM 6b as they are in the case of the forward direction transformation, but calculates 2's complements and transmits the calculated results to the registers $8_{13}$ and $8_{14}$ in the case of the inverse direction transformation. Further, in this second embodiment, the output data of the second memory section of the ROM 6b are transmitted directly to the registers $8_{11}$ and $8_{12}$, and the output data of the fourth memory section of the ROM 6b are transmitted directly to the registers $8_{15}$ and $8_{16}$.

Accordingly, when the accumulative additions have been completed, in the same way as with the case of the first embodiment, the multiplication and accumulation data obtained in accordance with the formulae (9), (11), (13) and (15) are held in the registers $12_1$, $12_2$, $12_3$, $12_4$, respectively in the case of the forward direction transformation; and the multiplication and accumulation data obtained in accordance with the formulae (10), (12), (14) and (16) are held in the registers $12_5$, $12_6$, $12_7$, $12_8$, respectively in the case of the inverse direction transformation. Further, in the same way as with the case of the first embodiment, the multiplication and accumulation data obtained in accordance with the formulae (17), (19), (21) and (23) are held in the registers $12_5$, $12_6$, $12_7$, $12_8$, respectively in the case of the forward direction transformation. However, being different from the first embodiment, the data obtained by inverting the signs of the multiplication and accumulation data obtained in accordance with the formulae (18), (20), (22) and (24) are held in the registers $12_5$, $12_6$, $12_7$, $12_8$, respectively in the case of the inverse direction transformation.

Further, the subtracter $15_1$ calculates a subtraction between the outputs of the registers $12_1$ and $12_5$, and the subtracter $15_2$ calculates a subtraction between the outputs of the registers $12_2$ and $12_7$. Further, the subtracter $15_3$ calculates a subtraction between the outputs of the registers $12_3$ and $12_8$, and the subtracter $15_4$ calculates a subtraction between the outputs of the registers $12_4$ and $12_6$.

On the other hand, the adder $16_1$ calculates an addition of the outputs of the registers $12_4$ and $12_6$, and the adder $16_2$ calculates an addition of the outputs of the registers $12_3$ and $12_8$. Further, the adder $16_3$ calculates an addition of the outputs of the registers $12_2$ and $12_7$, and the adder $16_4$ calculates an addition of the outputs of the registers $12_1$ and $12_5$.

The select switch $20_1$ selects the output $X_0$ of the register $12_1$ in the case of the forward direction transformation and output $x_0$ of the subtracter $15_1$ in the case of the inverse direction transformation, and transmits the selected output to the output register $22_1$. Further, the select switch $20_2$ selects the output $X_2$ of the register $12_2$ in the case of the forward direction transformation and output $x_2$ of the subtracter $15_2$ in the case of the revere direction transformation, and transmits the selected output to the output register $22_3$.

The select switch $20_3$ selects the output $X_4$ of the register $12_3$ in the case of the forward direction transformation and output $x_4$ of the subtracter $15_3$ in the case of the inverse direction transformation, and transmits the selected output to the output register $22_5$. Further, the select switch $20_4$ selects the output $X_6$ of the register $12_4$ in the case of the forward direction transformation and output $x_6$ of the subtracter $15_4$ in the case of the revere direction transformation, and transmits the selected output to the output register $22_7$.

The select switch $20_5$ selects the output $X_1$ of the register $12_5$ in the case of the forward direction transformation and output $x_1$ of the adder $16_1$ in the case of the inverse direction transformation, and transmits the selected output to the output register $22_2$. Further, the select switch $20_6$ selects the output $X_3$ of the register $16_6$ in the case of the forward direction transformation and output $x_3$ of the adder $16_2$ in the case of the revere direction transformation, and transmits the selected output to the output register $22_4$.

The select switch $20_7$ selects the output $X_5$ of the register $12_7$ in the case of the forward direction transformation and output $x_5$ of the adder $16_3$ in the case of the inverse direction transformation, and transmits the selected output to the output register $22_6$. Further, the select switch $20_8$ selects the output $X_7$ of the register $16_8$ in the case of the forward direction transformation and output $x_7$ of the adder $16_4$ in the case of the revere direction transformation, and transmits the selected output to the output register $22_8$.

Accordingly, in the case of the forward direction transformation, the transformed data $X_{i-1}$ are held in the output registers $22_i$ (i = 1, .., 8); and in the case of the inverse direction transformation, the transformed data $x_{i-1}$ are held in the output registers $22_i$ (i = 1, .., 8). The held data are outputted to the outside in sequence.

The effect the same as with the case of the first embodiment can be of course obtained in this second embodiment.

## Claims

1. A discrete cosine transform processor for executing both discrete cosine transform calculations and inverse discrete cosine transform on the basis of previously stored multiplication and accumulation data, comprising:

    input means (1) for receiving data to be processed;

    first adding and subtracting means (3, 4) for adding and subtracting specified combination of data received by said input means;

    first selecting means (5) for selectively outputting the results of the operations of said first adding and subtracting means (3, 4) to first memory means (6a) or to second memory means (6b); and wherein said first and second memory means comprising a plurality of memory sections;

    said first memory means (6a) for storing multiplication and accumulation data corresponding to even-order coefficients, said first memory means being implemented as a ROM of two bank construction having a first bank for storing multiplication and accumulation data for discrete cosine transform and a second bank for storing multiplication and accumulation data for inverse discrete cosine transform;

    said second memory means (6b) for storing multiplication and accumulation data corresponding to odd-order coefficients, said second memory means being implemented as a ROM of one bank construction and storing multiplication and accumulation data used in common for both the discrete cosine transform and the inverse discrete cosine transform in a first section thereof and storing multiplication and accumulation data for the inverse direction transformation other than data in common stored in said first memory section or in a second memory section; wherein said second memory means are programmed by two program lines used in common irrespective whether a discrete cosine transform or an inverse discrete cosine is computed; said selecting means (5) selectively outputting the results of the operations of said first adding and subtracting means to said first memory means or to said second memory means in two continuous 2 digit 2 bit data;

    sign inverting means (7) for inverting signs of the data used in common for the discrete cosine transform and the inverse discrete cosine transform, among said multiplication and accumulation data supplied by said second memory means, said sign inverting means having complement generators for generating 2's complements of said multiplication and accumulation data used in common for the discrete cosine and inverse discrete cosine and inverse discrete cosine transform stored in said second memory means while said multiplication and accumulation data used for the discrete cosine transform are transmitted as they are supplied by said second memory means;

    first accumulation means ($11_1$-$11_4$, $12_1$-$12_4$) for accumulatively adding said multiplication and accumulation data read from said first memory means; and

second accumulation means ($11_5$-$11_8$, $12_5$-$12_8$) for accumulatively adding said multiplication and accumulation data read from said second memory means other than the part of the data outputted as they are in case of a discrete cosine transform and the data outputted by said sign inverting means (7), in case of an inverse discrete cosine transform.

**2.** The discrete cosine transform processor according to claim 1, further comprising second selecting means (19) for selecting any of the data outputted from said first memory means and the data passed through said complement generators.

**3.** The discrete cosine transform processor according to claim 1, wherein said first and second memory means are two port ROMs.

**4.** The discrete cosine transform processor according to claim 1, wherein said first and second memory means are provided with decode signals for reading out data, said decode signal being composed of a plurality of data corresponding to number of pixels.

**5.** The discrete cosine transform processor as defined in claim 4, wherein the number of pixels is four.

**6.** The discrete cosine transform processor according to claim 1, wherein said sign inverting means include exclusive OR means.

**Patentansprüche**

**1.** Prozessor für diskrete Kosinustransformation, für die Ausführung sowohl von diskreten Kosinustransformations-Berechnungen als auch einer inversen diskreten Kosinustransformation, auf der Grundlage von vorher gespeicherten Multiplikations- und Akkumulations-Daten, umfassend:

ein Eingabemittel (1) zum Empfangen von zu verarbeitenden Daten;

erste Addier- und Subtrahier-Mittel (3, 4) zum Addieren und Subtrahieren von spezifizierten Kombinationen von Daten, die von dem Eingabemittel empfangen wurden;

erste Auswahlmittel (5) zum selektiven Ausgeben der Resultate der Operationen der ersten Addier- und Subtrahiermittel (3, 4) an erste Speichermittel (6a) oder zweite Speichermittel (6b); und wobei die ersten und zweiten Speichermittel eine Vielzahl von Speicherabschnitten umfassen;

die ersten Speichermittel (6a) zur Speicherung von Multiplikations- und Akkumulations-Daten Koeffizienten gerader Ordnung entsprechen, wobei die ersten Speichermittel implementiert sind als ROM mit Zweibank-Konstruktion, die eine erste Bank hat zur Speicherung von Multiplikations- und Akkumulationsdaten für die diskrete Kosinustransformation, und eine zweite Bank zur Speicherung von Multiplikations- und Akkumulationsdaten für eine inverse diskrete Kosinus-Transformation;

die zweiten Speichermittel (6b) zur Speicherung von Multiplikations- und Akkumulations-Daten Koffizienten ungerader Ordnung entsprechen, wobei die zweiten Speichermittel implementiert sind als ROM mit Einbank-Konstruktion und Multiplikations- und Akkumulationsdaten speichern, die gemeinsam verwendet werden sowohl für die diskrete Kosinustransformation als auch die inverse diskrete Kosinustransformation in einem ersten Abschnitt, und Multiplikations- und Akkumulationsdaten für die Transformation in inverser Richtung, die verschieden sind von gemeinsamen Daten, die in dem ersten Speicherabschnitt gespeichert sind oder in einem zweiten Speicherabschnitt; wobei die zweiten Speichermittel von zwei Programmleitungen programmiert werden, die gemeinsam verwendet werden, unabhängig davon, ob eine diskrete Kosinus-Transformation oder eine inverse diskrete Kosinustransformation berechnet wird; wobei das Auswahlmittel (5) selektiv die Resultate der Operationen der ersten Addier- und Subtrahier-Mittel an die ersten Speichermittel oder die zweiten Speichermittel in zwei kontinuierlichen zweiziffrigen 2-Bit-Daten ausgibt;

Vorzeichen-Inversionsmittel (7) zum Invertieren von Vorzeichen der Daten, die gemeinsam verwendet werden für die diskrete Kosinus-Transformation und die inverse diskrete Kosinus-Transformation, unter den Multiplikations- und Akkumulationsdaten, die von den zweiten Speichermitteln zugeführt werden, wobei die Vorzeichen-Inversionsmittel Komplementgeneratoren haben, um 2's Komplemente der Multiplikations- und Akkumulations-Daten zu erzeugen, die gemeinsam verwendet werden für den diskreten Kosinus und inversen diskreten Kosinus und die inverse diskrete Kosinus-Transformation, die in den zweiten Speichermitteln gespeichert sind, während die Multiplikations- und Akkumulations-Daten, die für die diskrete Kosinus-Transformation verwendet werden, so übertragen werden wie sie durch die zweiten Speichermittel zugeführt werden; erste Akkumulationsmittel ($11_1$-$11_4$, $12_1$-$12_4$) zur akkumulativen Addition der Multiplikations- und Akkumulations-Daten, die aus den ersten Speichermitteln ausgelesen werden; und

zweite Akkumulationsmittel ($11_5$-$11_8$, $12_5$-$12_8$) zur akkumulativen Addition der Multiplikations- und Akkumulations-Daten, die aus den zweiten Speichermitteln ausgelesen werden, ausser dem Teil der Daten, die ausgegeben werden wie sie sind im Fall einer diskreten Kosinustransformation und die Daten, die durch die Vorzeichen-Inversionsmittel (7) ausgegeben werden, im Fall der inversen diskreten Kosinus-Transformation.

**2.** Prozessor für diskrete Kosinus-Transformation nach Anspruch 1, ferner umfassend zweite Auswahlmittel (19) zur Auswahl der Daten, die aus den ersten Speichermitteln ausgegeben werden, oder den Daten, die durch die Komplementgeneratoren gegeben werden.

**3.** Prozessor für diskrete Kosinus-Transformation nach Anspruch 1, wobei die ersten und zweiten Speichermittel Zweianschluss-ROMs sind.

**4.** Prozessor für diskrete Kosinus-Transformation nach Anspruch 1, wobei die ersten und zweiten Speichermittel ausgestattet sind mit Dekodiersignalen zum Auslesen von Daten, wobei die Dekodiersignale aus einer Vielzahl von Daten bestehen, die der Pixelzahl entsprechen.

**5.** Prozessor für diskrete Kosinus-Transformation nach Anspruch 4, wobei die Pixelzahl 4 beträgt.

**6.** Prozessor für diskrete Kosinus-Transformation nach Anspruch 1, wobei die Vorzeichen-Inversionsmittel Exklusiv-ODER-Mittel enthalten.

**Revendications**

**1.** Processeur de transformée discrète de cosinus pour exécuter à la fois des calculs de transformée discrète de cosinus et de transformée discrète de cosinus inverse sur la base des données de multiplication et d'accumulation stockées précédemment, comprenant :

un moyen d'entrée (1) pour recevoir des données à traiter ;
un premier moyen d'addition et de soustraction (3, 4) pour additionner et soustraire une combinaison spécifiée des données reçues par ledit moyen d'entrée ;
un premier moyen de sélection (5) pour fournir sélectivement les résultats des opérations desdits premiers moyens d'addition et de soustraction (3, 4) au premier moyen de mémoire (6a) ou au second moyen de mémoire (6b) ; et dans lequel lesdits premier et second moyens de mémoire comprenant une pluralité de sections de mémoire ;
ledit premier moyen de mémoire (6a) pour stocker des données de multiplication et d'accumulation correspondant à des coefficients d'ordre pair, ledit premier moyen de mémoire étant implémenté comme une mémoire ROM d'une construction à deux banques ayant une première banque pour stocker des données de multiplication et d'accumulation pour une transformée discrète de cosinus et une seconde banque pour stocker des données de multiplication et d'accumulation pour une transformée discrète de cosinus inverse ;
ledit second moyen de mémoire (6b) pour stocker des données de multiplication et d'accumulation correspondant à des coefficients d'ordre impair, ledit second moyen étant implémenté conne une mémoire ROM d'une construction à une banque et pour stocker des données de multiplication et d'accumulation utilisées en commun pour à la fois la transformée discrète de cosinus et la transformée discrète de cosinus inverse dans la première section de celui-ci et pour stocker des données de multiplication et d'accumulation pour la transformation de direction inverse autre que les données en commun stockées dans ladite première section de mémoire ou dans une seconde section de mémoire ; dans lequel lesdits seconds moyens de mémoire sont programmés par deux lignes de programme utilisées en commun indépendamment de si une transformée discrète de cosinus ou une transformée discrète de cosinus inverse est calculée ; ledit moyen de sélection (5) fournissant sélectivement les résultats des opérations dudit premier moyen d'addition et de soustraction audit premier moyen de mémoire et audit second moyen de mémoire en deux données de 2 chiffres de 2 bits continues ;

un moyen d'inversion de signe (7) pour inverser des signes des données utilisées en commun pour la transformée discrète de cosinus et la transformée discrète de cosinus inverse, parmi lesdites données de multiplication et d'accumulation fournies par ledit second moyen de mémoire, ledit moyen d'inversion de signe ayant des générateurs de complément pour générer des compléments à 2 desdites données de multiplication et d'accumulation utilisées en commun pour la transformée discrète de cosinus et la transformée discrète de cosinus inverse et la transformée discrète de cosinus inverse stockée dans ledit second moyen de mémoire pendant que lesdites données de multiplication et d'accumulation utilisées pour ladite transformée discrète de cosinus sont transmises telles qu'elles sont fournies par ledit second moyen de mémoire ;

un premier moyen d'accumulation ($11_1$ à $11_4$, $12_1$ à $12_4$) pour additionner sélectivement lesdites données de multiplication et d'accumulation lues à partir dudit premier moyen de mémoire ; et

un second moyen d'accumulation ($11_5$ à $11_8$, $12_5$ à $12_8$) pour additionner sélectivement lesdites données de multiplication et d'accumulation lues par ledit second moyen de mémoire autre que la partie des données fournies telles qu'elles sont dans le cas d'une transformée discrète de cosinus et les données fournies par ledit moyen d'inversion de signe (7), dans le cas d'une transformée discrète de cosinus inverse.

**2.** Processeur de transformée discrète de cosinus selon la revendication 1, comprenant en outre un second moyen de sélection (19) pour sélectionner une quelconque des données fournies par ledit premier moyen de mémoire et les données passées à travers lesdits générateurs de complément.

**3.** Processeur de transformée discrète de cosinus selon la revendication 1, dans lequel lesdits premier et second moyens de mémoire sont des mémoires ROM à deux ports.

**4.** Processeur de transformée discrète de cosinus selon la revendication 1, dans lequel lesdits premier et second moyens de mémoire sont pourvus de signaux de décodage et des données d'extraction, ledit signal de décodage étant composé d'une pluralité de données correspondant au nombre de pixels.

**5.** Processeur de transformée discrète de cosinus tel que défini dans la revendication 4, dans lequel le nombre de pixels est quatre.

**6.** Processeur de transformée discrète de cosinus selon la revendication 1, dans lequel ledit moyen d'inversion de signe comprend un moyen OU exclusif.

2 BANK ROM

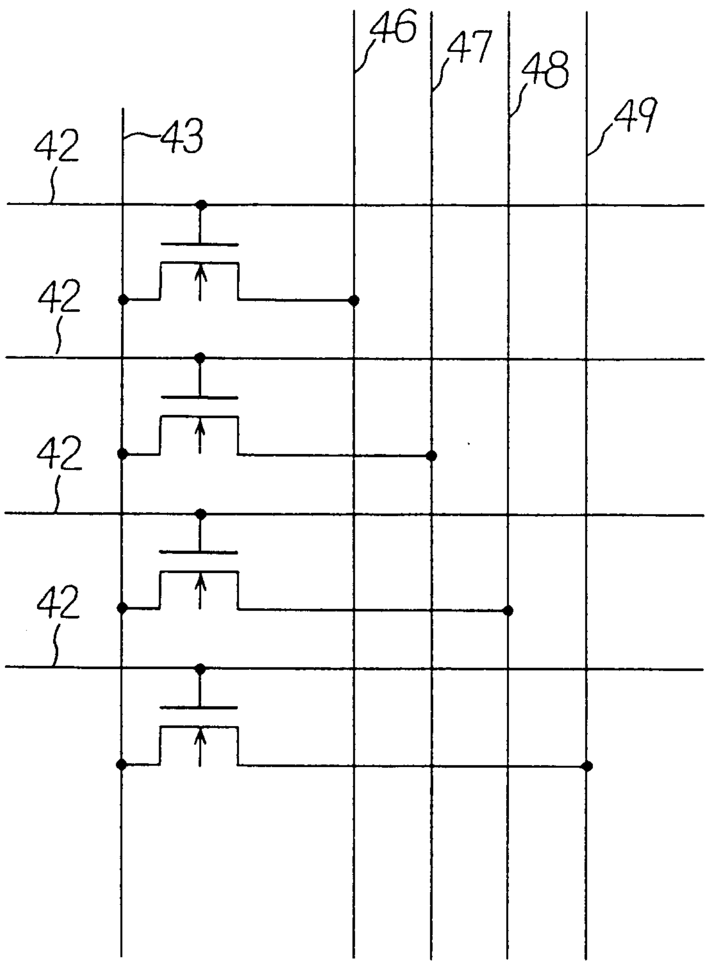


FIG. 1 PRIOR ART

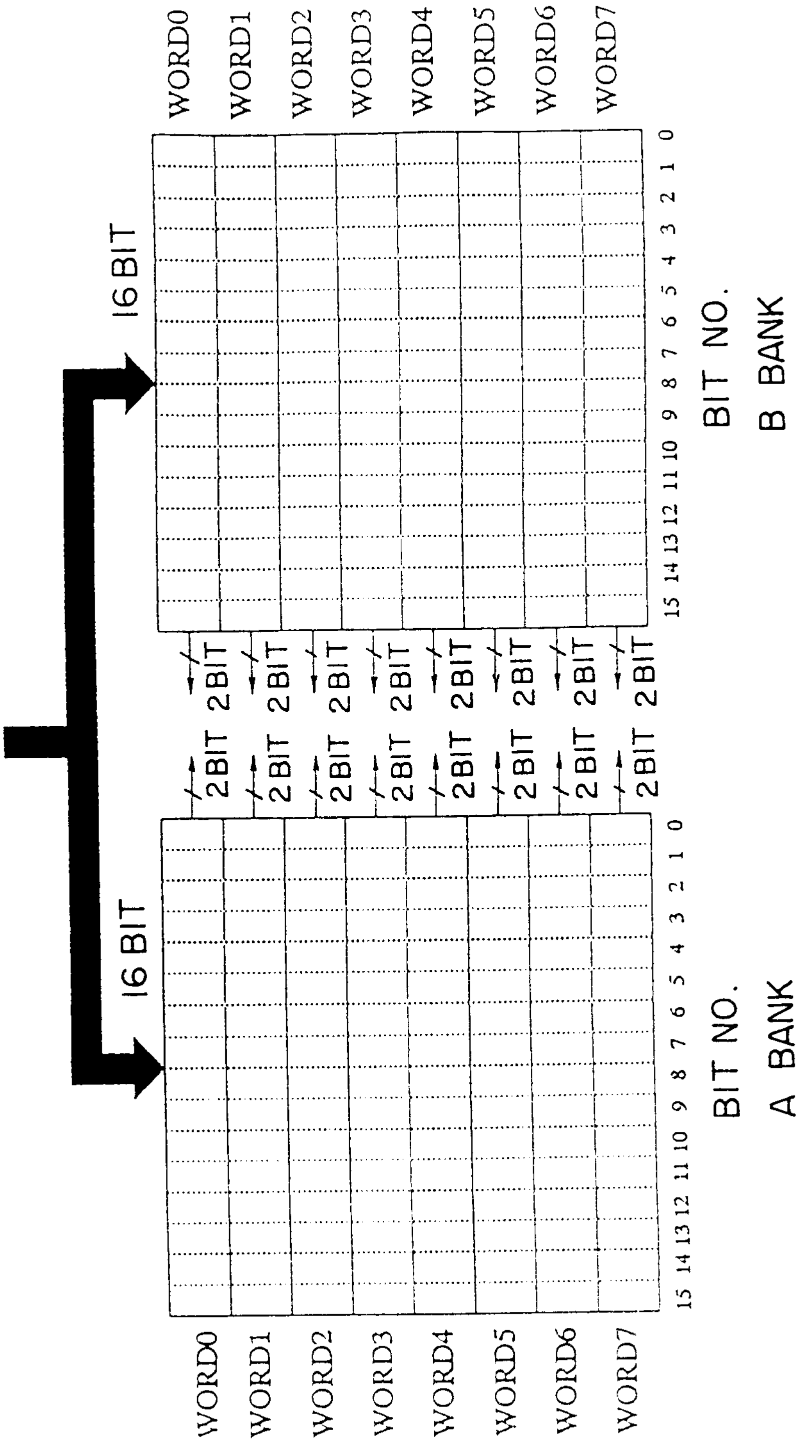


FIG. 2 PRIOR ART

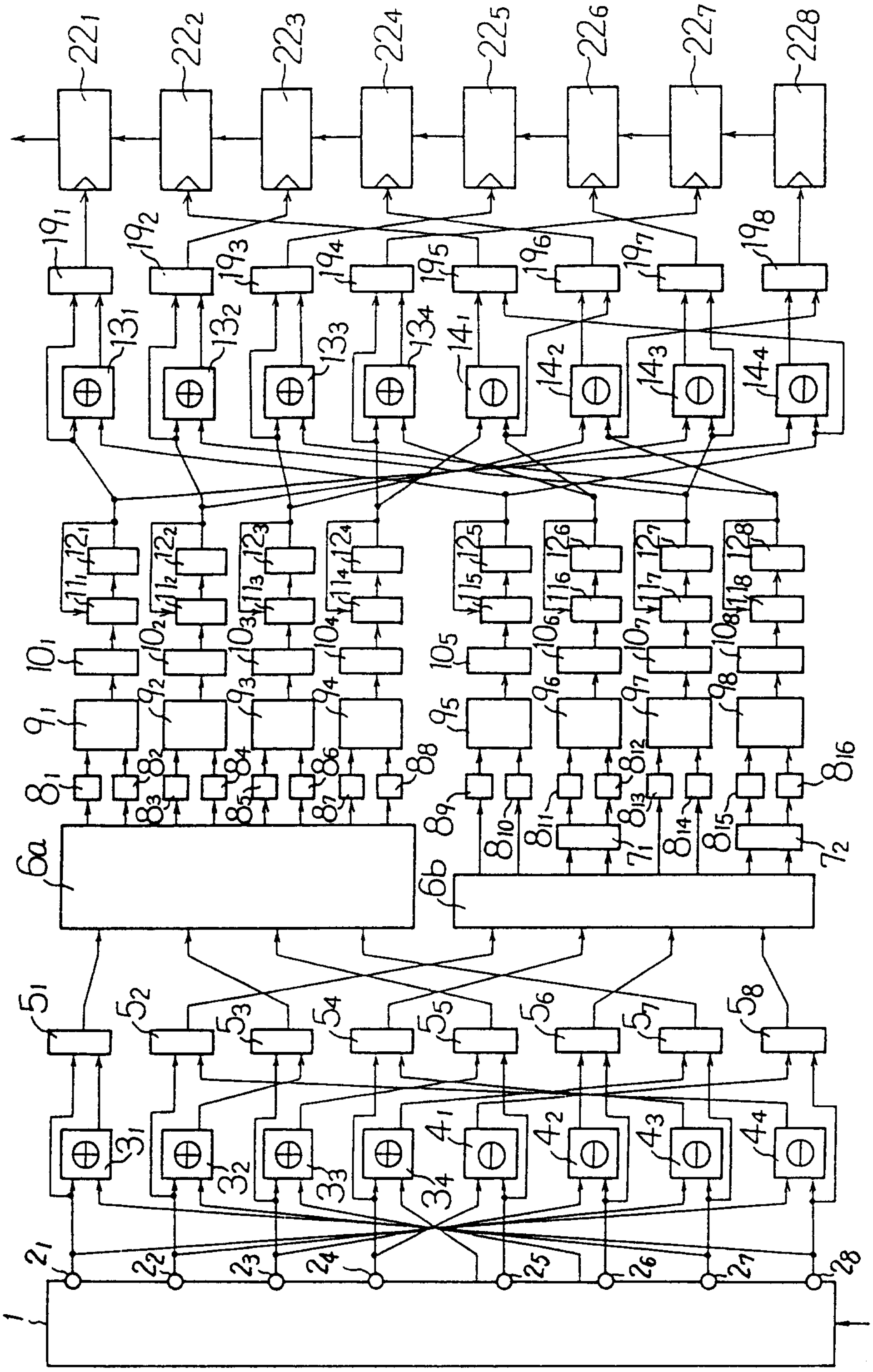

FIG. 3

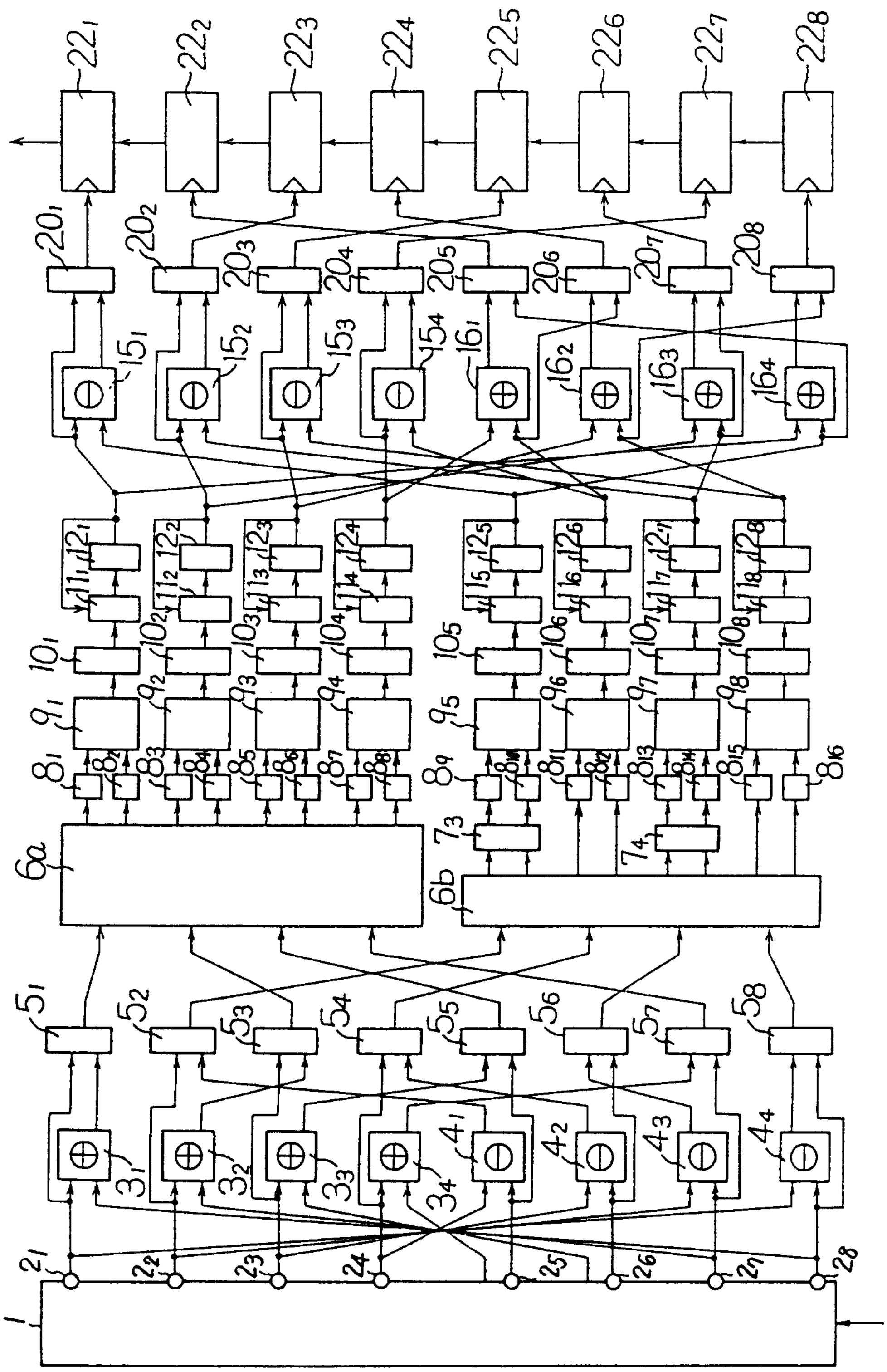

FIG. 4

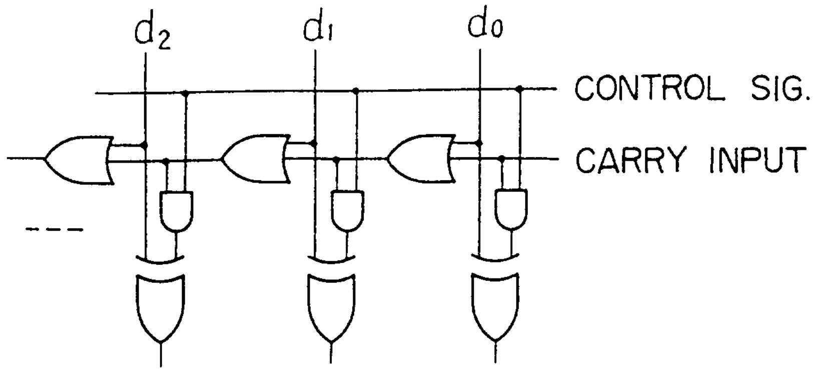


FIG. 5A

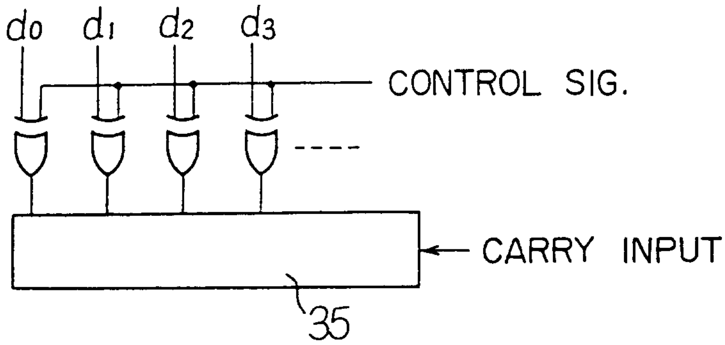


FIG. 5B

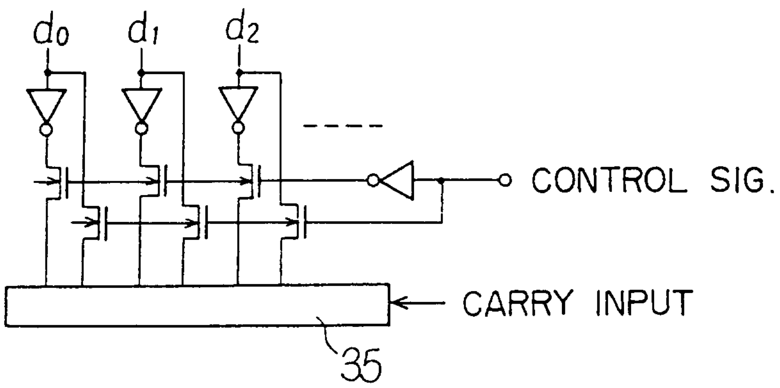


FIG. 5C

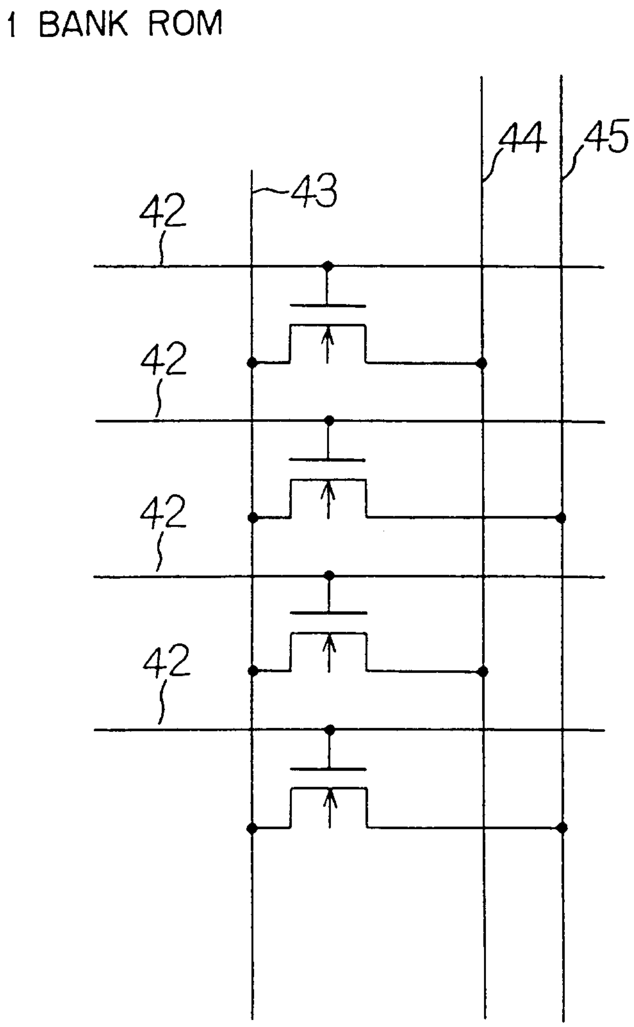


FIG. 6